Europäisches Patentamt

European Patent Office

Office européen des brevets

(19)

(11) EP 0 800 075 A1

(12) # DEMANDE DE BREVET EUROPEEN

(43) Date de publication:
08.10.1997 Bulletin 1997/41

(51) Int Cl.6: **G01N 21/35**, G01N 21/39

(21) Numéro de dépôt: 97400759.3

(22) Date de dépôt: 02.04.1997

(84) Etats contractants désignés:
DE GB IT

(30) Priorité: 04.04.1996 FR 9604242

(71) Demandeur: COMMISSARIAT A L'ENERGIE
ATOMIQUE
75015 Paris (FR)

(72) Inventeurs:
• Thony, Philippe
38500 La Buisse (FR)

• Molva, Engin
38000 Grenoble (FR)
• Ferrand, Bernard
38340 Voreppe (FR)

(74) Mandataire: **Moutard, Pascal Jean et al**
c/o Brevatome,
25, rue de Ponthieu
75008 Paris (FR)

(54) **Dispositif de détection de gaz à distance comportant un micro-laser**

(57)    L'invention concerne un procédé de détection de gaz à distance, comportant :

-    l'émission d'un premier rayonnement (4), à au moins une longueur d'onde d'absorption du gaz à détecter, à l'aide d'un premier microlaser déclenché, en direction d'une zone de test (6),

-    la production d'un premier signal (S), représentatif de la quantité de rayonnement qui est diffusé par ledit gaz en réponse à l'interaction entre les molécules ou les atomes de ce gaz et ce premier rayonnement.

L'invention concerne également un dispositif pour mettre en oeuvre ce procédé.

FIG. 1

EP 0 800 075 A1

**Description**

Domaine technique et art antérieur

L'invention se rapporte au domaine de la mesure, par des moyens optiques, de gaz dans l'atmosphère. Les gaz détectés se trouvent mélangés à l'air à des concentrations très faibles. Il s'agit souvent de gaz toxiques, polluants ou dangereux, comme par exemple le méthane, qui est un gaz explosif dans l'air pour une certaine concentration.

Le principe de la mesure consiste à déterminer l'absorption d'une zone de l'atmosphère. La zone d'atmosphère sondée est éclairée par une source de lumière. La lumière traverse cette zone. On récupère le signal lumineux par un moyen ou par un autre. Ce signal est quantifié sur un détecteur, qui permet d'avoir une information sur la quantité de lumière transmise, et absorbée dans la zone sondée. Par ailleurs, les gaz susceptibles d'exister dans la zone sondée sont connus et caractérisés du point de vue de la spectroscopie : on connaît leur spectre d'absorption. La mesure permet alors de reconnaître le gaz ou sa présence selon les qualités de la source d'éclairage.

Ce principe d'absorption, à quelques variantes près, est mis en oeuvre dans deux types d'appareils :

- les spectromètres qui utilisent une source de lumière à spectre large : ils donnent une information sur le spectre des espèces chimiques mesurées sur une large plage de longueur d'onde (de 3 à 5 µm ou de 8 à 13 µm pour les spectromètres infrarouge à Transformée de Fourier, par exemple). Le spectre mesuré est ensuite interprété pour reconnaître les espèces chimiques détectées,
- les appareils qui utilisent une source à spectre étroit. Ces sources (par exemple : un laser) émettent donc à une longueur d'onde précise. Ces appareils vont mesurer l'absorption due à une espèce chimique identifiée par avance. Ces mesures peuvent être faites sur une grande distance.

Plus précisément, l'ensemble des dispositifs qui nous intéressent ici appartiennent à la deuxième catégorie.

L'article de A. Tebo, intitulé "Optical monitoring techniques trace toxic pollutants", paru dans O.E. Reports, décrit plusieurs techniques de mesure de gaz polluants. L'une de ces techniques est dénommée DIAL (Differential Absorption Lidar), et met en oeuvre un laser à colorant pompé par un laser YAG dopé au néodyme (Nd) ou par un laser à excimère. Le faisceau obtenu en sortie de colorant est doublé en fréquence. Ce dispositif met en oeuvre des énergies laser importantes, de l'ordre du mJ (millijoule) par impulsion. Il est adapté à des mesures à très grande distance, de l'ordre de plusieurs centaines de mètres ou de plusieurs kilomètres.

L'article de J.P. WOLF intitulé "3-D Monitoring of Air Pollution Using Mobile "All-solid-state" Lidar Systems" paru dans Optics and Photonics News, Jan. 1995, p.27-29, décrit un dispositif laser $Ti:Al_2O_3$ (titane-saphir) pompé par lampes. Le faisceau obtenu en sortie est doublé en fréquence ou pompe un OPO. Ce dispositif met lui aussi en oeuvre des énergies laser importantes, de l'ordre de quelques dizaines de mJ par impulsion. Là encore il s'agit d'un dispositif adapté à des mesures à de très grandes distances (plusieurs kilomètres).

Cependant, certaines applications nécessitent une mesure dans une gamme de distances comprises entre 5m et 50m. C'est le cas lorsqu'on veut détecter une éventuelle fuite de gaz au voisinage d'un appareil ou lorsque l'on veut, par exemple, surveiller la concentration en méthane d'un site de travail. Pratiquement, les appareils décrits dans les articles de A. Tebo et J.P. Wolf se révèlent alors inadaptés.

En outre, ces appareils de l'art antérieur ne sont pas d'utilisation souple.

Dans le cas de l'appareil décrit par A. Tebo, si un premier colorant donné permet d'atteindre une émission laser dans une certaine gamme de longueurs d'onde, qui convient à un, ou plusieurs gaz donnés, il ne convient pas pour d'autres gaz : pour ces derniers, il faut donc trouver un second colorant adapté (ce qui n'est pas toujours possible), et puis remplacer le premier colorant par le second, ce qui représente une opération toujours délicate et difficilement réalisable sur certains sites de mesure. Par exemple, il se pose le problème de pouvoir détecter des composés aussi divers que l'oxygène, ou le méthane, ou l'ammoniac ou le dioxyde d'azote, ou l'ozone. Or, le premier présente une longueur d'onde caractéristique à 0,76µm, le second à 1,54µm, le troisième à 6,4µm et le dernier à 9,5µm. Dans ces conditions, plusieurs colorants sont nécessaires car un seul colorant ne saurait couvrir toute la gamme de fréquences de 0,5 µm à 10 µm.

Le dispositif décrit par J.P. Wolf permet de couvrir la gamme spectrale 695-950 nm, et les gammes 1,01-1,43 µm et 2,16-3,31 µm avec un OPO.

Or, ce dispositif met en oeuvre un laser titane-saphir, qui est complexe. L'ajout d'un éventuel cristal doubleur de fréquence ou d'un cristal OPO est lui-même délicat. Pour les autres longueurs d'onde, qu'il n'est pas possible d'atteindre avec une version du laser titane-saphir incorporant un doubleur, ou un OPO, il faut utiliser un autre laser, alors que le laser titane-saphir est lui-même déjà lourd et complexe.

**EP 0 800 075 A1**

Exposé de l'invention

Il se pose donc le problème de trouver un autre dispositif et un autre procédé de mesure, permettant de réaliser des mesures à moyenne distance, et apte à être aisément adaptable à diverses longueurs d'onde.

A cet effet, l'invention a pour objet un procédé de détection de gaz à distance, comportant :

- l'émission d'un premier rayonnement, à au moins une longueur d'onde d'absorption du gaz à détecter, à l'aide d'un premier microlaser déclenché, en direction d'une zone de test,
- la production d'un premier signal, représentatif de la quantité de rayonnement diffusé par ledit gaz, en réponse à l'interaction entre les molécules ou les atomes de ce gaz et le premier rayonnement.

Ce procédé peut être aisément mis en oeuvre pour détecter des gaz à une distance de l'ordre de quelques dizaines de mètres (par exemple entre 5 m et 40 m), et ceci malgré les faibles énergies du faisceau d'un microlaser (faible nombre de photons par impulsion).

Un utilisateur peut en outre facilement disposer de toute une série de microlasers, dont les caractéristiques (notamment composition du milieu actif laser) permettent d'obtenir des émissions à différentes longueurs d'onde. Ainsi, une telle "batterie" de microlasers permet de réaliser, in situ et de manière quasiment immédiate, des tests dans une zone donnée, afin d'y déterminer la présence de tel ou tel gaz cible. Un ensemble de microlasers peut également être monté, en barrette ou en matrice, permettant ainsi à l'opérateur de disposer d'un "kit" de longueurs d'onde. Ceci n'est pas réalisable avec un dispositif tel que celui décrit dans l'article de A. Tebo ou celui décrit dans l'article de J.P. Wolf.

La sélectivité du système de détection selon l'invention peut encore être accrue, si on choisit un microlaser dont les paramètres géométriques (longueur) de la cavité permettent d'obtenir un spectre d'émission déterminé. Ainsi, il est possible de réduire la longueur du microlaser, ou plutôt de la cavité résonnante Fabry-Pérot, ce qui permet d'obtenir un fonctionnement monomode longitudinal caractérisé par une seule raie émise, de quelques kilohertz de large.

Il est aussi possible de dimensionner le microlaser pour former un spectre multimode longitudinal, dont l'intervalle spectral libre est adapté au spectre des raies vibrationnelles des molécules gazeuses. Ceci permet de détecter la structure fine (raie vibrationnelle) du gaz ciblé, et de mieux l'identifier. En effet, l'absorption du signal lumineux par le gaz est d'autant plus importante que le spectre du faisceau incident correspond au spectre d'absorption de l'espèce gazeuse. Le spectre d'émission peut éventuellement être ensuite ajusté, par exemple en régulant la température du microlaser. Dans les deux cas, la sélectivité du système est donc accrue.

Ces possibilités de choisir ou de dimensionner la source de rayonnement pour obtenir un spectre d'émission déterminé sont difficiles à mettre en oeuvre dans le cas d'un outil tel que celui décrit dans l'article de A. Tebo, ou dans l'article de J.P. Wolf, cités ci-dessus.

Les microlasers présentent en outre l'avantage d'être de taille très petite : le volume d'un microlaser est de l'ordre du $mm^3$, ou moins. Le dispositif mis en oeuvre pour la réalisation du procédé selon l'invention est donc de petite taille et aisément transportable d'un site de mesure à un autre.

Avantageusement, le procédé selon l'invention comporte également :

- l'émission d'impulsions d'un second rayonnement, en direction de la zone de test, à une longueur d'onde non absorbée par le gaz à détecter,
- la production d'un second signal, représentatif de la quantité de rayonnement diffusé par ledit gaz, en réponse à l'interaction entre les molécules ou les atomes de ce gaz et le second rayonnement.

Par exemple, le second rayonnement peut être produit par un second microlaser déclenché, ce qui est compatible avec la faible taille des microlasers.

Les premier et second rayonnements peuvent aussi être émis à deux longueurs d'onde différentes, par un même microlaser : le dispositif mis en oeuvre est alors encore plus compact. Par exemple, on peut utiliser deux modes longitudinaux d'un même microlaser, espacés en fréquence par $n\frac{c}{2L}$ (n entier >1), $\frac{c}{2L}$ représentant l'intervalle spectral libre de la cavité microlaser.

Selon un autre exemple, la caractéristique spectrale d'émission du microlaser est modulée temporellement : les deux rayonnements sont alors obtenus à des instants consécutifs. Il est alors possible de prévoir ensuite une démodulation du premier et/ou du second signal.

Dans tous les cas, on peut également prévoir une étape de calcul de la quantité ou de la concentration de gaz, à partir du premier signal, ou des premier et second signaux.

Le premier microlaser peut être déclenché de manière passive, par un absorbant saturable. Le milieu actif du microlaser est constitué d'un matériau de base (YAG, YLF, verre) dopé avec des ions assurant l'effet laser ($Nd^{3+}$, $Cr^{4+}$, $Er^{3+}$,...). L'absorbant saturable est alors avantageusement constitué du même matériau de base, dopé avec des ions lui conférant des propriétés d'absorbant saturable ; mais le couple d'ions retenu pour le milieu actif et l'absorbant

3

saturable, est de préférence ajusté au gaz à détecter. L'invention concerne donc également la mise en oeuvre de couples de matériaux spécifiques, pour le milieu actif laser et l'absorbant saturable, bien adaptés à la détection de certaines espèces de gaz à détecter, tels que le méthane ou encore l'oxygène, ou le monoxyde de carbone.

L'invention concerne également un dispositif pour la mise en oeuvre du procédé selon l'invention.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente schématiquement un mode de réalisation de l'invention,
- la figure 2 est une représentation schématique d'un microlaser avec absorbant saturable intracavité,
- la figure 3 représente un microlaser déclenché activement,
- la figure 4 est un spectre d'une raie d'absorption d'un gaz à détecter,
- la figure 5 illustre la répartition des modes dans une cavité Fabry-Pérot plan-plan.
- les figures 6 à 8 représentent diverses configurations d'OPO pompés par microlaser,
- les figures 9 et 10 représentent des configurations de microlaser déclenché avec matériau non-linéaire intracavité.

Description détaillée de modes de réalisation de l'invention.

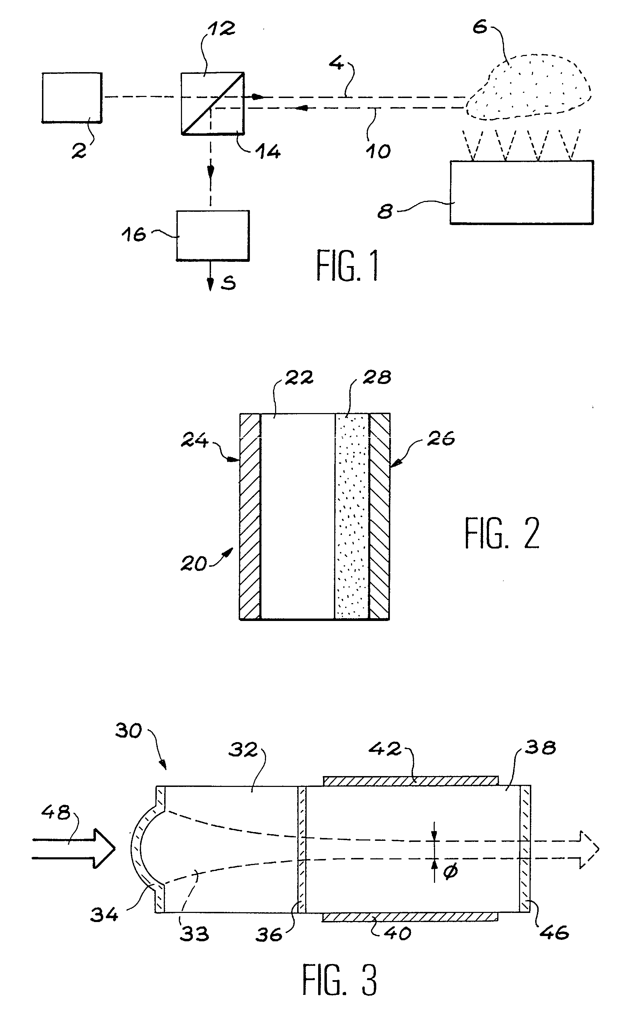

La figure 1 est une représentation d'un premier mode de réalisation de l'invention. Sur cette figure, un microlaser déclenché 2 envoie des impulsions d'un faisceau 4 en direction d'une zone 6 dans laquelle se trouve éventuellement un gaz à détecter, par exemple un gaz nocif qui s'échappe d'un objet 8. L'objet 8 peut être par exemple un appareil, en particulier un appareil électrique. Le gaz peut être par exemple du méthane, qui est explosif à partir d'une certaine concentration, et dont la présence pose des problèmes de sécurité et de détection, notamment dans les atmosphères confinées (galeries de mine et industrie chimique en particulier).

Au moins une des longueurs d'onde de rayonnement 4 émis par le microlaser 2 est située à l'intérieur d'une raie d'absorption du gaz à détecter. Si ce gaz est absent de la zone 6, le rayonnement 4 traverse celle-ci sans être absorbé. Si ce gaz est présent, il absorbe une partie des photons du rayonnement 4, et il réémet un rayonnement, dit rayonnement rétrodiffusé 10. Sur la figure 1, on n'a représenté que la partie du rayonnement rétrodiffusé qui se dirige vers un séparateur de faisceaux 12, qui envoie ce rayonnement sur un détecteur 16, tel qu'un détecteur à semi-conducteur. Eventuellement, un filtre peut être disposé entre le prisme 12 et le détecteur 16. Ce détecteur produit un signal représentatif de la quantité de rayonnement rétrodiffusé par le gaz présent dans la zone 6, et donc représentatif de la quantité ou de la concentration de ce gaz. Le signal S peut ensuite être envoyé sur une unité de traitement du signal qui permet un calcul de la caractéristique recherchée du gaz. La valeur calculée peut être ensuite par exemple affichée, par des moyens d'affichage, elle peut également être mémorisée pour être ultérieurement traitée avec d'autres valeurs mémorisées.

Le dispositif décrit ci-dessus convient particulièrement pour réaliser la détection de gaz à une distance comprise entre 5m et 40m ou 50m, par exemple à environ 30m. Des distances de l'ordre de 200 m peuvent être atteintes avec certains microlasers (YAG:Nd, notamment).

Le microlaser 2 comporte un milieu actif compris entre deux miroirs qui ferment une cavité microlaser. Le matériau constitutif du milieu actif est essentiellement un matériau de base, dopé avec un ion actif. Le matériau de base peut être choisi, par exemple, parmi l'un des matériaux suivants : YAG ($Y_3Al_5O_{12}$), YSO ($Y_2SiO_5$), YLF ($YLiF_4$). Dans tous les cas, l'ion dopant peut être par exemple du néodyme ($Nd^{3+}$), de l'erbium ($Er^{3+}$) ou du chrome ($Cr^{4+}$). Le matériau de base peut également être un verre ou de la silice, par exemple dopé à l'erbium ($Er^{3+}$).

Le milieu actif d'un microlaser est de faible épaisseur (entre 150 µm et 1000 µm) et de petites dimension (quelques $mm^2$). Les miroirs de cavité peuvent être directement déposés dessus. Enfin, il peut être pompé par une diode laser, par exemple III-V, directement hybridée sur le microlaser ou couplée à ce dernier par une fibre optique.

Le microlaser est un microlaser déclenché, de manière active ou passive.

Dans le cas d'un microlaser déclenché passivement, on utilise les propriétés des absorbants saturables. Ces matériaux sont fortement absorbants à une certaine longueur d'onde laser, et à faible densité de puissance, et deviennent pratiquement transparents lorsque la densité de puissance dépasse un certain seuil, qu'on appelle intensité de saturation. L'absorbant saturable introduit des pertes variables dans le temps, qui empêchent l'effet laser pour une certaine durée, au cours de laquelle l'énergie de pompage est stockée dans le niveau excité du matériau à gain. Ces pertes sont brusquement diminuées, lorsque la densité de puissance atteint l'intensité de saturation, libérant ainsi l'énergie emmagasinée, en un temps très court : on obtient ainsi une impulsion ayant une puissance crête très élevée. De préférence, le matériau absorbant saturable est disposé à l'intérieur de la cavité microlaser. Une telle structure est illustrée sur la figure 2, où la référence 20 désigne la cavité microlaser, qui comporte un matériau actif laser 22 et deux miroirs 24, 26 d'entrée et de sortie de la cavité microlaser. Un absorbant saturable 28 est disposé à l'intérieur de la cavité. Cet absorbant saturable peut être déposé sous forme de couches minces, directement sur le matériau actif solide 22. Une telle structure est décrite dans le document EP-653 824 (US-5 495 494). On trouvera également dans cette référence toutes les informations relatives au procédé de réalisation de cette structure. En particulier, la technique de dépôt par épitaxie en phase liquide, directement sur le matériau actif laser, est bien adaptée à la réalisation des absorbants saturables donnés en exemple dans la suite de la présente description.

Dans le cas d'un matériau de base du type verre ou silice, la préparation met en outre en oeuvre une étape de fonte de ce matériau, puis une étape de solidification ; enfin, des tranches de matériau sont débitées à l'épaisseur voulue. Les étapes suivantes sont identiques à celles décrites dans EP-653 824.

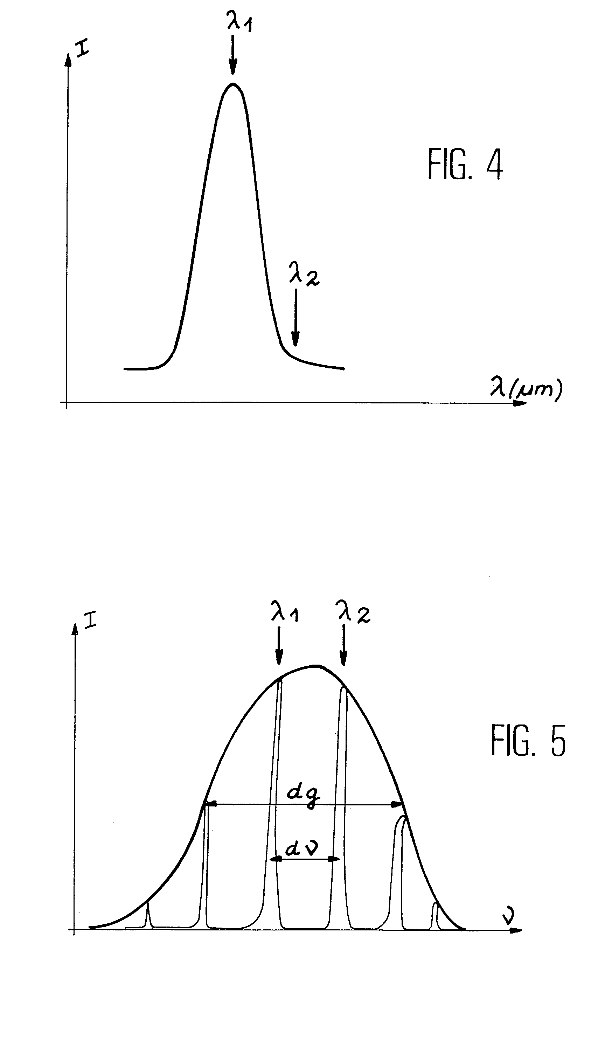

Le déclenchement du microlaser peut, selon une autre variante, être réalisé de manière active. Un déclenchement actif consiste, comme ci-dessus, à rajouter des pertes variables dans le temps à l'intérieur de la cavité ; mais, cette fois, la valeur des pertes est pilotée de façon externe par l'utilisateur. On met par exemple en oeuvre un matériau acousto-optique ou électro-optique intracavité. La durée de stockage, l'instant d'ouverture de la cavité, ainsi que le taux de répétition peuvent être choisis indépendamment par l'utilisateur. En contrepartie, cela nécessite une électronique adaptée au déclenchement. Une structure de microlaser solide à déclenchement actif, pouvant être mise en oeuvre dans le cadre de l'invention, est illustrée sur la figure 3, où la référence 30 désigne globalement la cavité microlaser. En fait, ce dispositif comporte une première cavité résonnante comprise entre un premier miroir d'entrée 34 et un miroir intermédiaire 36, et à l'intérieur de laquelle est incorporé le matériau actif laser 32. Il comporte une seconde cavité résonnante entre le miroir intermédiaire 36 et un miroir de sortie 46, à l'intérieur de laquelle est disposé un matériau 38 dont l'indice optique est apte à être modulé par une perturbation extérieure. Un exemple d'un tel matériau est un matériau électro-optique, commandé par une impulsion de tension extérieure appliquée à l'aide d'électrodes 40, 42 disposées de part et d'autre du matériau électro-optique 38. Avantageusement, des moyens sont disposés à l'entrée de la première cavité pour réduire la taille du faisceau laser : ces moyens peuvent être constitués par un miroir concave réalisé avec un micromiroir sur la face du matériau actif laser 32 destinée à être traversée par le faisceau de pompage. Les détails d'une telle structure, ses variantes, et les procédés de réalisation correspondants sont décrits dans le document FR-95 00767, déposé le 24 JANVIER 1995, et dont le contenu entier est incorporé par référence dans la présente description.

Un autre mode de réalisation de l'invention va être décrit, son principe étant expliqué à l'aide de la figure 4. Cette figure représente une partie du spectre d'absorption (pic d'absorption 50) d'un gaz à détecter. Comme on l'a dit ci-dessus, un procédé de détection consiste à diriger vers le gaz à détecter un rayonnement dont la longueur d'onde $\lambda_1$ se situe à l'intérieur d'un tel pic d'absorption qui est caractéristique pour le gaz considéré. Selon une variante, un second rayonnement est émis, à une longueur d'onde $\lambda_2$ qui se situe par exemple au pied de la raie d'absorption 50. Un gaz présent éventuellement dans une zone de test, telle que la zone 6 de la figure 1, rétrodiffuse les deux longueurs d'onde vers le détecteur 16 du système. Ce dernier fournit donc deux signaux $S_1$ et $S_2$ : $S_1$ est représentatif de la quantité de rayonnement rétrodiffusé, résultant de l'interaction entre les molécules ou les atomes du gaz à détecter et le rayonnement à la longueur $\lambda_1$ ; $S_2$ est représentatif de la quantité de rayonnement rétrodiffusé qui résulte de l'interaction entre les molécules ou les atomes du gaz à détecter et le rayonnement à la longueur d'onde $\lambda_2$. Les signaux $S_1$ et $S_2$ peuvent être ensuite mémorisés pour être traités ultérieurement, ou bien des moyens d'analyse peuvent permettre une détermination "in situ". Dans tous les cas, un traitement peut consister à réaliser la différence des signaux $S_1$-$S_2$ : le rayonnement $\lambda_2$ fournit une référence qui est à peu près indépendante de la présence ou de la concentration du gaz à détecter, référence par rapport à laquelle le signal $S_1$ traduit les variations de concentration et/ou de quantité de gaz à détecter.

Un dispositif pour obtenir deux émissions de rayonnements à deux longueurs d'onde distinctes peut comporter par exemple deux sources microlasers, avec deux cavités microlasers juxtaposées côte à côte, chacune étant pompée indépendamment de l'autre par des moyens optiques. La très petite taille des microlasers permet une telle juxtaposition sans modifier beaucoup le volume final du dispositif. Les deux cavités microlasers sont alors réalisées de manière à émettre à des longueurs d'onde légèrement décalées l'une par rapport à l'autre.

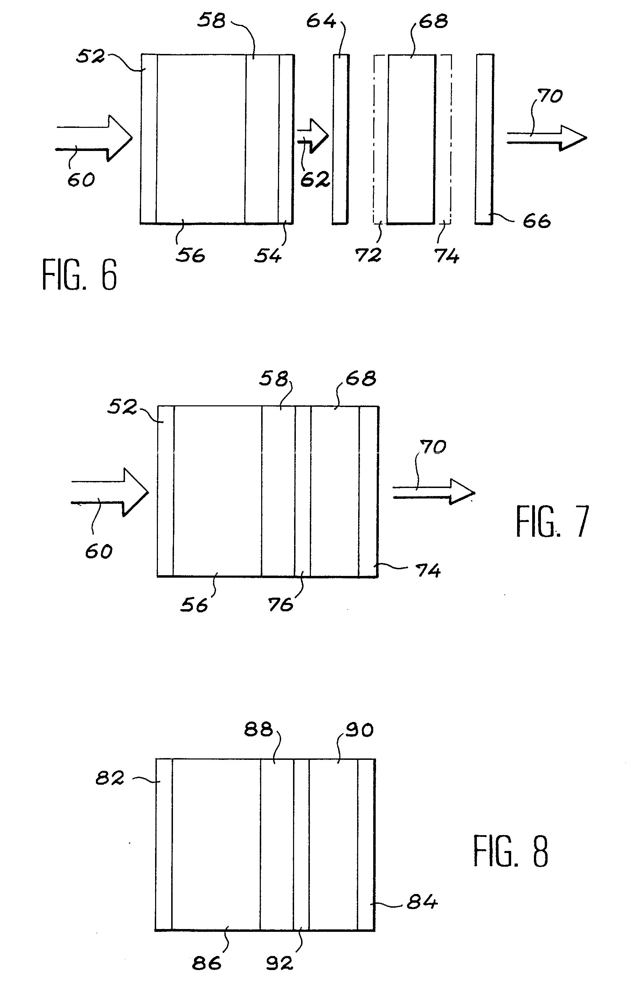

Il est également possible d'utiliser une seule source microlaser émettant deux longueurs d'onde. Ainsi, il existe des matériaux lasers pouvant émettre simultanément deux longueurs d'onde proches dans certaines conditions (c'est le cas du YAG dopé à l'ytterbium). Une autre possibilité consiste à exploiter le fait qu'une cavité microlaser peut émettre plusieurs modes longitudinaux. La figure 5 représente un diagramme de la répartition spectrale des modes Fabry-Pérot du milieu amplificateur. Sur ce diagramme, l'enveloppe des modes représente la bande de gain, dg représente la largeur de la bande de gain et dv l'espacement des modes. Sur l'axe vertical est porté l'intensité en unité arbitraire. L'axe horizontal est une échelle de fréquence. Si la cavité Fabry-Pérot est une cavité plan-plan d'épaisseur optique e, l'intervalle spectral libre dv entre deux modes est donné par : $dv = \frac{c}{2e}$, où c est la vitesse de la lumière.

Si dg est la largeur de la bande de gain (d'émission laser) du matériau, le nombre de modes N sera donné par : $N = \frac{dg}{dv}$.

On voit que le nombre de modes à l'intérieur de la cavité dépend essentiellement de l'épaisseur de celle-ci. On peut donc la choisir de manière à ce que ce nombre N soit par exemple égal 2. On obtient alors les deux émissions à deux longueurs d'onde λ1 et λ2 légèrement décalées l'une par rapport à l'autre, d'une quantité $dv = \frac{c}{2e}$.

On peut aussi choisir e de manière à obtenir N=1. L'épaisseur typique d'une cavité microlaser à milieu actif YAG, sans moyens de déclenchement intracavité, permettant d'obtenir N=1 est d'environ 750μm. Avec des moyens de déclenchement intracavité, il faut en outre tenir compte de l'épaisseur optique de ceux-ci.

Selon encore une autre variante, des moyens sont prévus, qui permettent de réaliser une modulation temporelle du spectre d'émission du microlaser. Ces moyens peuvent être par exemple un cristal électro-optique intracavité ou des moyens de modulation de la température du microlaser. Il est alors possible de prévoir un traitement du signal incorporant une démodulation du signal, ou des signaux mesuré(s).

Dans tous les cas, la, ou les, longueur(s) d'onde d'émission du microlaser dépend(ent) essentiellement des caractéristiques du milieu actif laser, c'est-à-dire de sa composition, et, dans le cas où le déclenchement est réalisé à l'aide d'un absorbant saturable, de la nature de l'absorbant saturable, c'est-à-dire de sa composition.

Par exemple, pour un milieu actif laser dopé au néodyme, les longueurs d'onde qu'il est possible d'obtenir se situent aux alentours de 1,06μm, 1,32μm ou 946 nm. Selon les matrices dans lesquelles l'ion néodyme est inséré, ces valeurs varient un peu. D'autres dopants permettent des émissions à d'autres longueurs d'onde : le thulium (émission à 1,9 μm environ) et l'holmium (émission à environ 2,1 μm et 3,9 μm), l'erbium (émission à 1,5 μm et à environ 3 μm), l'ytterbium (émission à 1 μm environ) et le praséodyme (émission à 5,2 μm et 7,2 μm environ).

Dans le cas de la présence d'un absorbant saturable intracavité, ce dernier est de préférence formé par un matériau de base du même type que le matériau de base du milieu actif laser, et est dopé avec des ions lui conférant des propriétés d'absorbant saturable. Ainsi, la cavité microlaser comporte alors deux éléments constitués d'un même matériau de base dopé avec des ions différents, ce qui définit un couple d'ions pour un même matériau de base, l'ensemble déterminant la longueur d'onde d'émission de la cavité microlaser. En fonction de la longueur d'onde d'absorption du gaz à détecter, choisie pour identifier ce dernier (par exemple longueur d'onde $\lambda_1$ du pic d'absorption 50 de la figure 4), le matériau de base et le couple d'ions sont donc choisis.

Ainsi, pour un certain nombre de composés gazeux à détecter, on a rassemblé, dans le tableau I suivant, une valeur d'une longueur d'onde d'absorption, le couple d'ions dopants pour le milieu laser et l'absorbant saturable. Le matériau de base de ces deux éléments est, dans les trois premiers cas, du YAG et, dans les deux derniers cas, du verre ou de la silice.

TABLEAU I

| COMPOSE A DETECTER | FORMULE | LONGUEUR D'ONDE D'ABSORPTION | ION DOPANT (MILIEU LASER) | ION DOPANT (ABSORBANT SATURABLE) |
|---|---|---|---|---|
| Méthane, propane, butane | $CH_4$, $C_3H_8$, $C_4H_{10}$ | 1,33μm | néodyme | vanadium |
| Acide fluorhydrique | HF | 1,33μm | néodyme | vanadium |
| Vapeur d'eau | $H_2O$ | 1,36μm | néodyme ou chrome | vanadium |
| Oxydes de carbone | CO ou $CO_2$ | 1,57μm | erbium | uranium ou erbium |
| Ammoniac | $NH_3$ | 1,54μm | erbium | uranium ou erbium |

Pour ces 5 composés, un détecteur à semi-conducteur à base de InGaAs ou de germanium est apte à détecter le rayonnement rétrodiffusé par le composé gazeux.

Dans tous les cas, que le déclenchement soit actif ou passif, il est possible de combiner une structure microlaser, émettant à une longueur d'onde déterminée, avec un élément non linéaire, de préférence intracavité, tel qu'un oscillateur paramétrique optique (OPO) ou bien un cristal doubleur ou tripleur de fréquence, ou bien un amplificateur paramétrique (OPA), ou bien un dispositif effectuant une somme ou une différence de fréquence optique (KTP ou $LiNbO_3$ ou $KNbO_3$ ou BBO ou LBO) ou bien un dispositif effectuant un décalage RAMAN de la fréquence. Ces dispositifs permettent d'atteindre des longueurs d'onde adaptées aux espèces gazeuses à détecter.

En particulier, pour mettre en évidence des aérosols végétaux, dont les longueurs d'onde d'absorption sont comprises entre 250 nm et 350 nm, on utilisera de préférence un matériau laser YAG dopé au néodyme, triplé ou quadruplé en fréquence. Dans le cas d'un déclenchement passif, l'absorbant saturable sera alors de préférence du YAG dopé avec des ions chrome $Cr^{4+}$.

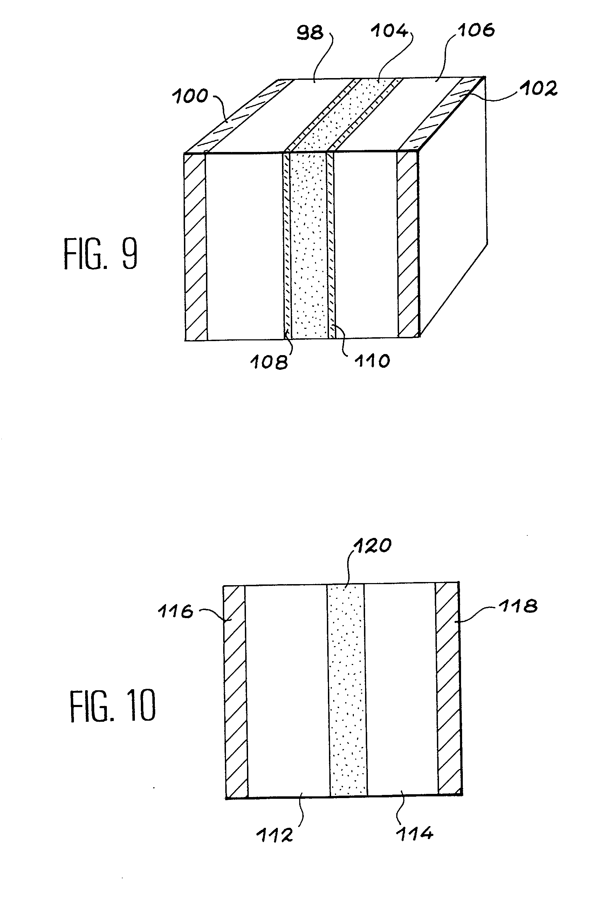

Une structure de microlaser incorporant un élément de déclenchement actif et un élément optiquement non-linéaire est représentée sur la figure 9. Plus précisément, la cavité comporte un milieu actif laser 98, fermé par un miroir d'entrée 100 et un miroir de sortie 102. A l'intérieur de la cavité, se trouvent en outre deux autres éléments :

- un élément de déclenchement 104 de la cavité, en mode actif ou passif,
- un matériau non linéaire 106 permettant de multiplier par un facteur n (n≥2) la fréquence de base du milieu actif laser 98.

Le matériau non linéaire peut être par exemple un cristal non linéaire de KTP, qui permet d'obtenir un doublage de la fréquence de base du microlaser. Par exemple, un rayonnement à 1064nm obtenu à partir d'un milieu actif laser YAG:Nd est converti par ce cristal en rayonnement à 532nm. Un effet de quadruplement de la fréquence peut être obtenu en incorporant, à l'intérieur de la même cavité microlaser, un cristal non linéaire de KTP et un cristal non linéaire de BBO. L'invention s'applique également à tout type de cristal non linéaire permettant d'obtenir un doublage de la fréquence du milieu actif laser de la microcavité, ainsi qu'à tout type de cristal non linéaire permettant de multiplier la fréquence du milieu laser de la microcavité par un facteur n (n≥2, par exemple n=3, 4,...). Par exemple, on peut utiliser les cristaux suivants : BBO, LBO, $KNbO_3$, $LiNbO_3$.

La présence simultanée, à l'intérieur de la cavité microlaser, de moyens de déclenchement 104 de cette cavité et de moyens 106 pour multiplier la fréquence de base du milieu actif laser a pour conséquence une augmentation très importante du rendement de fonctionnement des moyens (cristal 106) permettant de multiplier la fréquence. Ainsi, pour un cristal doubleur, un rendement de 80% a été constaté avec cette structure.

Comme illustré sur la figure 9, d'autres éléments additionnels peuvent être compris dans la cavité, tels que par exemple une couche de colle 108 permettant de relier l'absorbant saturable 104 au milieu actif laser 98, ou une couche 110 d'un milieu qui permet d'adapter l'indice à l'interface des milieux 106 et 104.

La figure 10 représente le microlaser obtenu lorsque l'absorbant saturable 120 a la forme d'une couche mince directement déposée sur le milieu actif laser 112. Le matériau non-linéaire 114 complète la cavité microlaser, limitée par les miroirs 116, 118.

Les procédés de réalisation de ces structures avec un élément non-linéaire intracavité sont décrits dans la demande FR-95 05650.

Dans le cas de la détection d'oxygène ($O_2$), la longueur d'onde d'absorption choisie se situe aux alentours de 0,76µm ; le matériau actif laser est de préférence un matériau à base de silicium ou de verre dopé avec des ions erbium et doublé en fréquence, tandis que l'absorbant saturable est également à base de silicium ou de verre dopé avec des ions uranium ou erbium. Un détecteur au silicium permet alors de détecter le rayonnement rétrodiffusé.

Pour atteindre des longueurs d'onde plus grandes, comprises par exemple entre 3 et 10 µm, on pourra utiliser un oscillateur paramétrique optique. Les OPO permettent, en faisant interagir le faisceau laser avec un cristal OPO, de générer un rayonnement de longueur d'onde plus grande que celle du laser, dont les caractéristiques spatiales et temporelles sont proches de celles du faisceau de pompe. En modifiant les conditions d'accord de phase du cristal non-linéaire (soit par rotation du cristal, soit par changement de température), on peut faire varier de manière continue, et dans une gamme très large, la longueur d'onde du rayonnement émis. De manière plus précise, un photon de pompe de fréquence $\nu_p$ se décompose, en sortie de l'OPO, en deux photons : le photon de fréquence la plus élevée $\nu_s$ est appelé photon "signal", et celui de fréquence plus basse $\nu_i$ est appelé photon "complémentaire" (ou IDLER). Pour des raisons de conservation de l'énergie, on a la relation : $\nu_s + \nu_i = \nu_p$. Le document FR-95 05654 déposé le 12 Mai 1995, décrit des structures d'oscillateurs paramétriques optiques pompés par un microlaser, structures qui sont compatibles avec l'invention selon la présente demande.

Les figures 6-8 représentent diverses structures possibles de microlasers pompant un OPO.

Sur la figure 6, les références 52 et 54 désignent des miroirs d'entrée et de sortie d'une cavité microlaser qui comporte un milieu actif laser 56 et des moyens 58 de déclenchement, en mode actif ou passif, de cette cavité microlaser. La cavité peut être pompée par des moyens non représentés sur la figure, le faisceau de pompage étant désigné par la référence 60. La cavité émet un faisceau laser 62 qui va pomper à son tour une seconde cavité, dite cavité OPO. Cette cavité OPO est délimitée par deux miroirs 64, 66 entre lesquels est placé un matériau non linéaire 68 (par exemple un cristal) permettant de réaliser une cavité d'un oscillateur paramétrique optique. Cette cavité émet à son tour un faisceau OPO 70.

Le matériau constitutif du milieu 68 peut être choisi parmi les matériaux connus, non linéaires, tels que par exemple $KTiOPO_4$ (KTP), $MgO:LiNbO_3$, $\beta$-$BaB_2O_4$, $LiB_3O_5$, et AgGaSe. Les propriétés du matériau KTP sont décrites, par exemple, dans l'article de Terry et al. paru dans Journal of Optical Society of America, B, vol. 11, pages 758-769 (1994). Les propriétés d'autres matériaux non linéaires permettant de réaliser un OPO sont décrite dans l'ouvrage de R.W. Boyd intitulé "Non-linear optics" (Academic Press, 1992, USA, N°ISBN 0-12-121680-2), en particulier pages 85 et suivantes. Les miroirs d'entrée et de sortie de la cavité OPO peuvent également être disposés comme représenté en pointillés sur la figure 6 : dans ce cas deux miroirs 72, 74 sont directement déposés sur les faces d'entrée et de sortie du matériau 68. Cette configuration permet de gagner en compacité et d'obtenir une cavité indéréglable, et qu'il n'est pas nécessaire d'aligner en cours de fonctionnement.

Du fait du pompage par un microlaser, il est possible non seulement d'abaisser l'énergie de seuil de la cavité OPO, mais également de réduire la longueur du cristal 68 nécessaire au fonctionnement de l'OPO : ainsi, dans l'article de Terry et al. mentionné ci-dessus, un OPO avec un cristal de 20mm de longueur est décrit, tandis que l'invention permet d'utiliser des matériaux de quelques mm d'épaisseur, par exemple 5 mm. D'une façon générale, du fait des propriétés du faisceau 62 émis par le laser, ce résultat (énergie de seuil abaissée, longueur de cristal réduite) s'applique non seulement à un cristal de KTP, mais aussi à tout autre cristal ou matériau non linéaire utilisé pour réaliser une cavité OPO.

La compacité du système est encore accrue si, comme illustré sur la figure 7, les miroirs 54 et 64 sont confondus. La structure obtenue est alors une structure extrêmement compacte. Sur la figure 7, des éléments identiques à ceux de la figure 6 sont désignés par les mêmes références numériques et la référence 76 désigne un miroir intermédiaire commun à la cavité microlaser et à la cavité OPO. La cavité microlaser étant elle-même très compacte, même avec un élément de déclenchement 58, il est ainsi possible d'obtenir un oscillateur OPO dont la longueur totale, y compris ses moyens de pompage, ne dépasse pas 6mm, pour une section de 1mm$^2$, soit un volume total de 6mm$^3$.

En outre, toutes les structures OPO décrites ci-dessus bénéficient largement des possibilités de fabrication collective des microlasers. Par ailleurs, le dépôt de miroir directement sur le matériau non linéaire 68 est également compatible avec les techniques de fabrication collectives et, par conséquent, l'ensemble de l'appareil est lui-même compatible avec ces techniques collectives, du type de celles qui sont utilisées en microélectronique. Ainsi, on peut réaliser une production de masse à très faible août.

Le miroir d'entrée 52, déposé par des procédés connus, est de préférence un miroir de type dichroïque présentant une réflectivité maximum (la plus proche possible de 100%) à la longueur d'onde du laser et une transmission la plus élevée possible (>80%) à la longueur d'onde de la pompe (en général vers 800 nm pour les matériaux dopés Nd, vers 980 nm pour ceux dopés Er et vers 780 nm pour ceux dopés Tm). Le miroir de sortie 54, 76 est également de préférence de type dichroïque mais laisse passer quelques pour cent du faisceau laser.

En ce qui concerne la cavité OPO, il est possible d'ajuster les réflectivités des miroirs d'entrée et de sortie de cette cavité de façon à former une cavité doublement résonnante autour du matériau non-linéaire 68. Le miroir d'entrée 76 a une réflectivité élevée proche de 100% à $\lambda_{signal}$ pour une cavité simplement résonnante et une réflectivité proche de 100% à $\lambda_{Idler}$ pour une cavité doublement résonnante. Le miroir de sortie 74, 66 a une réflectivité supérieure à 90% à $\lambda_{signal}$ pour une cavité simplement résonnante ou à $\lambda_{Idler}$ pour une cavité doublement résonnante. Ceci permet de diminuer encore le seuil de fonctionnement de la cavité 68.

Un autre mode de réalisation est illustré sur la figure 8. Il n'y a plus cette fois deux cavités séparées (cavité microlaser et cavité OPO) mais une cavité microlaser qui contient la cavité OPO. La cavité microlaser est limitée par deux miroirs d'entrée et de sortie 82, 84 de la cavité microlaser. Elle contient un milieu actif laser 86, un élément 88 de déclenchement de la cavité, un cristal non linéaire 90 qui forme, avec un miroir intermédiaire 92 et le miroir de sortie 84 de la cavité, une "sous-cavité" OPO. A cette fin, le miroir intermédiaire 92 est transparent à la longueur d'onde du faisceau laser, et réfléchissant à la longueur d'onde du faisceau signal de la cavité OPO tandis que le miroir 84 est transparent à $\lambda_{Idler}$ pour une cavité simplement résonnante, et réfléchissante à $\lambda_{Idler}$ pour une cavité doublement résonnante. Le miroir 84 est partiellement transparent à la longueur d'onde du faisceau signal de la cavité OPO. Ce mode de réalisation permet de disposer d'une densité d'énergie encore plus importante à l'intérieur de la cavité OPO tout en gardant le bénéfice d'une structure extrêmement compacte et monolithique.

Les procédés de réalisation de ces structures avec OPO sont décrits dans le document FR-95 05654.

En utilisant un OPO, suivant une des structures décrites ci-dessus en liaison avec les figures 6 à 8, il est en particulier possible de générer un rayonnement à une longueur d'onde de 3,3μm, qui convient pour mettre en évidence des vapeurs de benzène ($C_6H_6$) : un microlaser émettant à 1,06μm (par exemple YAG:Nd) permet, en combinaison avec un OPO, d'émettre les longueurs d'onde 1,5μm et 3,3μm. De plus, ces deux longueurs d'onde peuvent être utilisées pour détecter un gaz ou deux gaz. Un détecteur à semi-conducteur, à base de InSb, ou InAs convient pour la détection d'un signal rétrodiffusé à partir d'une vapeur de benzène.

Le dioxyde d'azote ($NO_2$) présente une longueur d'onde d'absorption à 6,4μm. Là encore, cette longueur d'onde peut être atteinte avec un microlaser (YAG:Nd$^{3+}$, absorbant saturable = YAG:Cr$^{4+}$) qui pompe un OPO (AgGaSe$_2$). Un détecteur à semi-conducteur à base de InSb permet, là encore, de détecter le rayonnement rétrodiffusé.

L'ozone présente un pic d'absorption à environ 9,5μm. Un OPO (AgGaSe$_2$) pompé par un microlaser (YAG:Tm, l'absorbant saturable = YAG:Ho$^{3+}$) permet d'obtenir un rayonnement à cette longueur d'onde. Un détecteur à base de HgCdTe permet une détection à cette longueur d'onde.

Dans tous les cas, quels que soient le mode de déclenchement et la structure de cavité microlaser retenus, il est possible de réaliser une cavité plan-plan, dans laquelle les miroirs d'entrée et de sortie sont plans. Selon un autre mode de réalisation, il est possible également de réaliser une cavité stable avec des micromiroirs concaves en entrée et/ou en sortie de cavité microlaser. La présence d'au moins un miroir concave permet de stabiliser la cavité, celle-ci présentant alors un seuil de déclenchement plus faible ainsi qu'un meilleur rendement. En outre, la présence d'un micromiroir concave permet d'ajuster la taille du faisceau laser dans les différents milieux de la cavité, ce qui permet d'accroître encore la densité de puissance au niveau des différents éléments intracavité (élément OPO, non-linéaire, absorbant saturable). Dans le cas d'un déclenchement actif (figure 3), la présence d'un micromiroir concave en entrée permet de réduire la tension à appliquer de part et d'autre de l'élément actif 38 : sans miroir concave, il faut une tension d'environ 1000 V, un miroir permet de ramener cette tension à environ 100 volts.

Le procédé et le dispositif selon la présente invention présentent de nombreux avantages, et en particulier ceux liés à la structure du microlaser. Un microlaser est en effet de coût réduit, il peut être fabriqué collectivement et pompé par une diode laser. C'est par ailleurs un dispositif de grande fiabilité, du fait de son caractère monolithique et indéréglable. Un microlaser ne nécessite aucune maintenance et aucun réglage, le système est compact et facilement transportable. Enfin, la consommation électrique nécessaire au fonctionnement est extrêmement réduite.

**Revendications**

1.  Procédé de détection de gaz à distance, comportant :

    -   l'émission d'un premier rayonnement (4), à au moins une longueur d'onde ($\lambda_1$) d'absorption du gaz à détecter, à l'aide d'un premier microlaser déclenché (2), en direction d'une zone de test (6),
    -   la production d'un premier signal, représentatif de la quantité de rayonnement diffusé (10) par ledit gaz, en réponse à l'interaction entre les molécules ou les atomes de ce gaz et le premier rayonnement.

2.  Procédé selon la revendication 1, comportant également :

    -   l'émission d'impulsions d'un second rayonnement, en direction de la zone de test, à une longueur d'onde ($\lambda_2$) non absorbée par le gaz à détecter,
    -   la production d'un second signal, représentatif de la quantité de rayonnement diffusé par ledit gaz en réponse à l'interaction entre les molécules ou les atomes de ce gaz et le second rayonnement.

3.  Procédé selon la revendication 2, le second rayonnement étant produit par un second microlaser déclenché.

4.  Procédé selon la revendication 2, les premier et second rayonnements étant des rayonnements émis à deux longueurs d'onde par un même microlaser.

5.  Procédé selon la revendication 4, les premier et second rayonnements étant des rayonnements de deux modes longitudinaux du même microlaser, espacés en fréquence par n fois l'intervalle spectral libre de la cavité du microlaser ($n \geq 1$).

6.  Procédé selon la revendication 2, les premier et second rayonnements étant émis par un même microlaser, dont la caractéristique spectrale d'émission est modulée temporellement.

7.  Procédé selon la revendication 6, le premier et/ou le second signal (signaux) étant ultérieurement démodulé(s).

8.  Procédé selon l'une des revendications 1 à 7, comportant en outre une étape de calcul de la quantité ou de la concentration de gaz, à partir du premier signal, ou des premier et second signaux.

9.  Procédé selon l'une des revendications 1 à 8, la zone de test (6) étant située à proximité d'un appareil (8).

10. Procédé selon l'une des revendications précédentes, la distance entre le premier microlaser déclenché (2) et la zone de test (6) étant comprise entre 5 m et 200 m.

11. Procédé selon l'une des revendications précédentes, le gaz à détecter étant un aérosol végétal, ou de l'oxygène ($O_2$), ou du méthane ($CH_4$), ou du butane ($C_4H_{10}$) ou du propane ($C_3H_8$), ou de l'acide fluorhydrique (HF), ou de la vapeur d'eau ($H_2O$), ou du monoxyde de carbone (CO), ou du dioxyde de carbone ($CO_2$), ou de l'ammoniac ($NH_3$) ou du benzène ($C_6H_6$), ou du dioxyde d'azote ($NO_2$) ou de l'ozone ($O_3$).

12. Procédé selon l'une des revendications précédentes, le premier microlaser étant déclenché de manière active.

13. Procédé selon l'une des revendications 1 à 11, le premier microlaser étant déclenché de manière passive, à l'aide d'un absorbant saturable.

14. Procédé selon la revendication 13, le microlaser ayant un milieu actif laser constitué par de la silice ou du verre dopé avec des ions erbium, l'absorbant saturable étant constitué de silice ou de verre dopé avec des ions uranium (U) ou avec des ions erbium (Er).

15. Procédé selon la revendication 13, le microlaser ayant un milieu actif laser constitué par du YAG dopé au néodyme (Nd) ou au chrome (Cr) ou au thulium (Tm), l'absorbant saturable étant constitué par du YAG dopé au vanadium ou à l'holmium (Ho).

16. Procédé selon l'une des revendications 1 à 15, le microlaser comportant en outre un cristal non-linéaire, disposé à l'intérieur ou à l'extérieur de la cavité microlaser.

17. Dispositif pour la détection de gaz à distance, comportant :

- un premier microlaser déclenché (2), émettant un premier rayonnement à une première longueur d'onde ($\lambda_1$),
- des moyens pour produire un signal ($S_1$) représentatif d'un rayonnement diffusé (10) par ledit gaz, en réponse à l'interaction entre les molécules ou les atomes de gaz et le premier rayonnement.

18. Dispositif selon la revendication 17, comportant en outre :

- des moyens pour émettre des impulsions d'un second rayonnement à une seconde longueur d'onde ($\lambda_2$),
- des moyens pour produire un second signal ($S_2$) représentatif d'un rayonnement diffusé par ledit gaz, en réponse à l'interaction entre les molécules ou les atomes de gaz et le second rayonnement.

19. Dispositif selon la revendication 18, les moyens pour émettre des impulsions d'un second rayonnement comportant un second microlaser déclenché.

20. Dispositif selon la revendication 18, les moyens pour émettre des impulsions d'un second rayonnement étant constitué par le premier microlaser.

21. Dispositif selon la revendication 20, les premier et second rayonnement étant des rayonnements de deux modes longitudinaux du microlaser, espacés en fréquence par n fois l'intervalle spectral libre de la cavité microlaser (n≥1).

22. Dispositif selon la revendication 20, le microlaser étant muni de moyens pour moduler temporellement sa caractéristique spectrale d'émission.

23. Dispositif selon la revendication 22, comportant en outre des moyens de démodulation du premier signal et/ou du second signal.

24. Dispositif selon l'une des revendications 17 à 23, comportant en outre des moyens permettant le calcul d'une quantité ou d'une concentration de gaz, à partir du premier signal et/ou du second signal.

25. Dispositif selon l'une des revendications 17 à 24, comportant des moyens de déclenchement actif du premier microlaser.

26. Dispositif selon l'une des revendications 17 à 24, comportant un absorbant saturable pour déclencher passivement le microlaser.

27. Dispositif selon la revendication 26, le microlaser ayant un milieu actif laser constitué par de la silice ou du verre dopé avec des ions erbium, l'absorbant saturable étant constitué de silice ou de verre dopé avec des ions uranium (U) ou avec des ions erbium (Er) .

28. Dispositif selon la revendication 26, le microlaser ayant un milieu actif laser constitué par du YAG dopé au néodyme (Nd) ou au chrome (Cr), l'absorbant saturable étant constitué par du YAG dopé au Vanadium.

29. Dispositif selon l'une des revendications 17 à 28, le microlaser comportant en outre un cristal non-linéaire, disposé à l'intérieur ou à l'extérieur de la cavité microlaser.

**30.** Dispositif selon l'une des revendications 17 à 29, comportant une pluralité de microlasers déclenchés, dont les caractéristiques d'émission correspondent à différentes longueurs d'onde.

FIG. 1

FIG. 2

FIG. 3

FIG. 4

FIG. 5

FIG. 6

FIG. 7

FIG. 8

FIG. 9

FIG. 10

Office européen
des brevets

**RAPPORT DE RECHERCHE EUROPEENNE**

Numero de la demande

EP 97 40 0759

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 41 17 072 A (ZENTRALINSTITUT FUER OPTIK UND) 26 novembre 1992 <br> * colonne 1, ligne 59 - colonne 2, ligne 10 * <br> * colonne 2, ligne 30 - ligne 37 * <br> * colonne 3, ligne 38 - ligne 41 * <br> --- | 1-30 | G01N21/39 <br> G01N21/35 |
| X | IEEE PHOTONICS TECHNOLOGY LETTERS, vol. 3, no. 1, 1 janvier 1991, pages 86-87, XP000202979 <br> SHIMOSE Y ET AL: "REMOTE SENSING OF METHANE GAS BY DIFFERENTIAL ABSORPTION MEASUREMENT USING A WAVELENGTH TUNABLE DFB LD" <br> * page 86, colonne de gauche, alinéa 1-2 * <br> * abrégé; figure 3 * <br> --- | 1-30 | |
| D,A | EP 0 653 824 A (COMMISSARIAT ENERGIE ATOMIQUE) 17 mai 1995 <br><br> * abrégé; revendications 1,2,6 * <br> --- | 1-5,13, 14,17, 19-21, 26-28,30 | **DOMAINES TECHNIQUES RECHERCHES (Int.Cl.6)** |
| A | US 4 953 166 A (MOORADIAN ARAM) 28 août 1990 <br><br> * abrégé * <br> * colonne 8, ligne 6 - ligne 8 * <br> --- | 1-5,12, 16,17, 19-21, 25,29,30 | G01N |
| A | US 5 488 619 A (INJEYAN HAGOP ET AL) 30 janvier 1996 <br><br> * abrégé * <br> ----- | 1-5,12, 16,17, 19-21, 25,29,30 | |

Le présent rapport a été établi pour toutes les revendications

| Lieu de la recherche | Date d'achèvement de la recherche | Examinateur |
|---|---|---|
| LA HAYE | 9 juillet 1997 | Scheu, M |

EPO FORM 1503 03.82 (P04C02)